(19) Europäisches Patentamt / European Patent Office / Office européen des brevets

(11) **EP 3 328 816 B1**

(12) **EUROPÄISCHE PATENTSCHRIFT**

(45) Veröffentlichungstag und Bekanntmachung des Hinweises auf die Patenterteilung:
**16.12.2020   Patentblatt 2020/51**

(21) Anmeldenummer: **16753940.2**

(22) Anmeldetag: **22.08.2016**

(51) Int Cl.:
*C05B 3/00* (2006.01)   *C05D 3/02* (2006.01)
*C05F 1/00* (2006.01)   *C05F 7/00* (2006.01)
*C05F 9/00* (2006.01)   *C05F 11/00* (2006.01)
*C01B 25/22* (2006.01)   *C05B 11/02* (2006.01)
*C05B 11/06* (2006.01)   *C05B 11/08* (2006.01)
*C05B 11/10* (2006.01)   *C05B 13/06* (2006.01)

(86) Internationale Anmeldenummer:
**PCT/EP2016/069801**

(87) Internationale Veröffentlichungsnummer:
**WO 2017/042022 (16.03.2017 Gazette 2017/11)**

(54) **VERFAHREN ZUR PHOSPHORRÜCKGEWINNUNG**

METHOD FOR RECOVERING PHOSPHORUS

PROCÉDÉ DE RÉCUPÉRATION DE PHOSPHORE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2015   DE 102015115119**

(43) Veröffentlichungstag der Anmeldung:
**06.06.2018   Patentblatt 2018/23**

(73) Patentinhaber:
• **Zentrum für Sonnenenergie- und Wasserstoff-Forschung Baden-Württemberg Gemeinnützige Stiftung**
**70563 Stuttgart (DE)**
• **Wehrle-werk Aktiengesellschaft**
**79312 Emmendingen (DE)**

(72) Erfinder:
• **BRELLOCHS, Jochen**
**70569 Stuttgart (DE)**

• **SPECHT, Michael**
**71111 Waldenbuch (DE)**
• **ZUBERBÜHLER, Ulrich**
**70563 Stuttgart (DE)**
• **EDER, Christian**
**66450 Bexbach (DE)**
• **KORNMAYER, Christoph**
**79117 Freiburg (DE)**
• **KLAUSING, Benjamin**
**68199 Mannheim (DE)**
• **SCHAUB, Martin**
**77933 Lahr (DE)**

(74) Vertreter: **Ter Meer Steinmeister & Partner Patentanwälte mbB**
**Nymphenburger Straße 4**
**80335 München (DE)**

(56) Entgegenhaltungen:
WO-A1-2010/130589   JP-A- 2003 190 967
NL-A- 8 401 313   US-A- 4 352 332

**Beschreibung**

**Gebiet der Erfindung**

Die vorliegende Erfindung betrifft ein Verfahren zur Phosphorrückgewinnung durch thermochemische Umsetzung eines phosphorhaltigen Materials, wie beispielsweise eines phosphorhaltigen Ersatzbrennstoffes, in Gegenwart von calciumhaltigen Partikeln in einem Bewegtbettreaktor und anschließender Abtrennung von mit Phosphor angereichertem Abrieb aus dem Bewegtbettreaktor. Ferner betrifft die vorliegende Erfindung die Verwendung eines durch das Verfahren erhaltenen phosphorhaltigen Wertstoffs als Düngemittel oder Düngemittelzusatz.

**Stand der Technik**

Durch landwirtschaftliche Nutzung werden den genutzten Böden mineralische Rohstoffe wie beispielsweise phosphorhaltige Verbindungen entzogen, welche durch anschließende Zufuhr mineralischer Dünger wieder zugeführt werden müssen. Mit der stofflichen und energetischen Nutzung von Biomasse, wie beispielsweise aus Haushaltsabfällen oder Klärschlamm, ist ein Entzug von Nährstoffen aus den natürlichen Stoffkreisläufen verbunden. Die Erhaltung der Fruchtbarkeit des Bodens durch den Einsatz von künstlichen Mehrstoffdüngern aus fossilen Ressourcen ist auf Dauer nicht zielführend. Insbesondere Phosphor ist ein limitierter Rohstoff und seine effiziente Nutzung für einen fruchtbaren Boden vor dem Hintergrund einer wachsenden Weltbevölkerung ist von großer Bedeutung. Unter Gesichtspunkten der Nachhaltigkeit rückt die Schließung von natürlichen Nährstoffkreisläufen immer mehr in den Vordergrund.

Die Verfügbarkeit von fossilen Rohphosphaten, deren Hauptbestandteil meist kalksteinbasierte Phosphate sind, beträgt weltweit ca. $6*10^{10}$ Tonnen. Dabei sind die Lagerstätten geographisch ungleich verteilt. Die Vorkommen liegen vor allem in Afrika sowie neben China, Russland und den USA im mittleren Osten, während in Europa keine wirtschaftlich bedeutenden Lagerstätten vorkommen. Das jährlich in Deutschland verfügbare Phosphorpotenzial aus sekundären Quellen beträgt ca. 130.000 Tonnen Phosphor. Dabei sind knapp 60.000 Tonnen in Klärschlammen, ca. 30.000 Tonnen in Tier- und Fleischknochenmehl sowie ca. 25.000 Tonnen in Bio- Schlachthof- und Grünabfällen enthalten.

Es ist daher notwendig, die dem Boden entzogenen Rohstoffe durch die Aufarbeitung von Biomasse und der darin enthalten Rohstoffe wieder zurückzuführen.

Aschen aus der Verbrennung von phosphorhaltigen Materialien wie beispielsweise Ersatzbrennstoff (EBS) oder Klärschlamm sind aufgrund des hohen Gehalts an Phosphor geeignete Rohstoffquellen. Aufgrund der schlechten Pflanzenverfügbarkeit des in den Aschen enthaltenen Phosphors sowie eventueller Schadstoffgehalte ist jedoch eine direkte Verwendung der Aschen als Düngemittel beziehungsweise Phosphor-Düngemittelzusatz meist nicht möglich.

Rückstände aus der Verbrennung von phosphorhaltigen Brennstoffen, wie beispielsweise in Vergasungsanlagen oder Kohlekraftwerken, werden daher zumeist deponiert oder zementiert und stehen somit den Stoffkreisläufen nicht mehr als Rohstoffquelle zur Verfügung.

Es besteht somit ein Bedarf an der Rückgewinnung von Phosphor aus phosphorhaltigen Brennstoffen und dessen Rückführung in die natürlichen Stoffkreisläufe.

WO2011/137880 betrifft ein Verfahren zur Herstellung von Phosphat- und Mehrnährstoff-Düngemitteln aus regenerativen phosphorhaltigen Wertstoffen und deren Einsatz in landwirtschaftlichen Bereichen. Hierbei werden Aschen aus der Monoverbrennung von Klärschlämmen mit Orthophosphorsäure zu Calciumdihydrogenphsophat aufgeschlossen. Der hierbei erforderliche Zusatz großer Mengen an Orthophosphorsäure macht das Verfahren jedoch großtechnisch unrentabel. Ferner kann bei der thermochemischen Konversion phosphorhaltiger Brennstoffe wie Klärschlämmen oder Ersatzbrennstoff der Wertstoff Phosphor bei hohen Temperaturen durch Ascheerweichung verglasen und steht dann nicht mehr für die Phosphorrückgewinnung zur Verfügung.

WO2009/100937 betrifft insbesondere ein Wirbelschichtbettmaterial, welches aus mindestens einem Metalloxid und/oder mindestens einem Carbonat besteht sowie deren Verwendung zur $CO_2$-Absorption sowie zur Abtrennung von Schwefelverbindungen und anderen in Rohgasen üblicherweise enthaltenen Verunreinigungen.

Die US 4 352 332 A beschreibt ein Verfahren zur Abtrennung von Phosphor aus phosphorhaltigen Abfällen durch thermochemische Umsetzung der phosphorhaltigen Abfälle in Gegenwart von calciumhaltigen Partikeln in einem Bewegtbettreaktor unter Bildung von Calciumphosphat.

**Aufgabe der Erfindung**

Der vorliegenden Erfindung liegt somit die Aufgabe zugrunde, ein Verfahren bereitzustellen, durch welches der in phosphorhaltigen Materialien, wie beispielsweise Brennstoffen oder Ersatzbrennstoffen, enthaltene Phosphor zurückgewonnen werden kann. Ferner soll der hierdurch erhaltene Phosphor in die natürlichen Rohstoffkreisläufe zurückgeführt werden können.

## Zusammenfassung der Erfindung

Die obige Aufgabe wird gelöst durch ein Verfahren zur Phosphorrückgewinnung gemäß Anspruch 1 sowie die Verwendung des zurückgewonnen Phosphors gemäß Anspruch 10. Bevorzugte beziehungsweise besonders zweckmäßige Ausgestaltungen der Erfindung sind in den Unteransprüchen angegeben.

Gegenstand der Erfindung ist daher ein Verfahren, umfassend die Schritte:

i) thermochemische Umsetzung eines phosphorhaltigen Materials in Gegenwart von calciumhaltigen Partikeln in einem Bewegtbettreaktor,

ii) Abtrennung von mit Phosphor angereichertem Abrieb aus dem Bewegtbettreaktor, wobei die Abtrennung des mit Phosphor angereicherten Abriebs aus dem Reaktoraustrag in einer oder mehreren Abtrennvorrichtungen erfolgt, welche innerhalb oder außerhalb des Bewegtbettreaktors angeordnet sein können, wobei die Betriebstemperatur der ersten Abtrennvorrichtung oberhalb 400 °C liegt, um den Gehalt an Schwermetallen und polyaromatischen Kohlenwasserstoffen zu reduzieren, und

iii) Umsetzung des in Schritt ii) erhaltenen mit Phosphor angereicherten Abriebs mit einer Säure, um einen mit Phosphor angereicherten, pflanzenverfügbaren Wertstoff zu erhalten.

Ein weiterer Gegenstand der Erfindung ist die Verwendung des in Schritt iii) erhaltenen Wertstoffs als Düngemittel oder Düngemittelzusatz.

## Detaillierte Beschreibung der Erfindung

Es konnte in der vorliegenden Erfindung überraschend festgestellt werden, dass die Nachteile des Stands der Technik durch die Zugabe von Calcium enthaltenden Partikeln als Bettmaterial eines Bewegtbettreaktors überwunden werden können. Es konnte darüber hinaus unerwartet gefunden werden, dass Phosphor durch Verbrennung beziehungsweise Vergasung von phosphorhaltigen Materialien in einem Bewegtbettreaktor durch zugegebene Calcium enthaltende Partikel bei der thermochemischen Konversion chemisch als Phosphat gebunden, während der Verbrennung bzw. Vergasung von den Partikeln abgerieben und somit als phosphorhaltiger Abrieb aus dem Reaktor isoliert werden kann. Der hierdurch erhaltene chemisch als Phosphat gebundene Phosphor kann ferner durch Ansäuerung in pflanzenzugänglicher Form erhalten werden. Der hierdurch erhaltene Wertstoff kann als phosphorhaltiges Düngemittel oder Düngemittelzusatz verwendet oder hierzu verarbeitet werden. Der zurück gewonnene Phosphor kann hierdurch dem natürlichen Stoffkreislauf zurückgeführt werden. Ferner wurde überraschend gefunden, dass durch das beanspruchte Verfahren eine Abreicherung von Störstoffen, wie beispielsweise Schwermetallen, erzielt werden kann, wodurch der erhaltene Wertstoff im besonderen Maße der weiteren technischen Nutzung zugänglich wird.

Das in dem erfindungsgemäßen Verfahren eingesetzte phosphorhaltige Material umfasst sämtliche phosphorhaltigen Materialien, welche thermochemisch in einem Bewegtbettreaktor umgesetzt werden können. Das phosphorhaltige Material kann organischen oder anorganischen Ursprungs sein oder Mischungen von organischen und anorganischen Materialien umfassen, beispielsweise Klärschlamm, Ersatzbrennstoff, Haus- und Gewerbeabfälle, Abfallholz, Kleinschrott, Papier und Pappen, Verpackungsmaterialien sowie aus diesen Materialien hergestellte Pyrolyseprodukte.

Bevorzugt ist das phosphorhaltige Material ein Brennstoff oder Ersatzbrennstoff (EBS). Als Ersatzbrennstoff kommen alle üblichen sekundären Brennstoffe in Frage, welche aus Abfällen gewonnen werden, wie beispielsweise Industrie-, Gewerbe- oder Haushaltsabfälle, wobei Abfälle, welche einen hohen Gehalt an phosphorhaltigen Materialien aufweisen bevorzugt sind. Besonders bevorzugt sind Brennstoffe mit einem hohen Gehalt an Biomasse. Beispiele für besonders phosphorreiche Brennstoffe sind Klärschlamm, Gärrest, Restmüll nach Fermentierung, Tierverarbeitungsrückstände, wie bsp. Schlachthofabfälle, Tier- oder Knochenmehl, sowie Grünabfälle, wie bsp. Abfälle aus Land- oder Forstwirtschaft oder Gartenbau. Festbrennstoffe bzw. trockene Brennstoffe sind gegenüber feuchten oder flüssigen Brennstoffen bevorzugt. Gegebenenfalls kann dem phosphorhaltigen Material auch konventioneller Brennstoff zugesetzt werden, wie beispielsweise Steinkohle und/oder Braunkohle. Alternativ kann als phosphorhaltiges Material auch konventioneller Brennstoff eingesetzt werden, vorausgesetzt, dass dieser Anteile an phosphorhaltigen Verbindungen enthält.

Die thermochemische Umsetzung des phosphorhaltigen Materials in Gegenwart der Calcium enthaltenden Partikel kann in einem beliebigen Bewegtbettreaktor, wie einem Wirbelschichtreaktor oder einem Drehrohrreaktor, erfolgen. Bei der thermochemischen Umsetzung erfolgt typischerweise eine Konvertierung des phosphorhaltigen Materials und des Bettmaterials des Bewegtbettreaktors zu einem Gas- bzw. Dampfgemisch und einem Feststoffgemisch. Hierbei dient das Bettmaterial des Reaktors üblicherweise als Wärmeträger zur Aufheizung des phosphorhaltigen Materials und als Katalysator für die Umsetzung des eingesetzten phosphorhaltigen Materials als Brennstoff. Zusätzlich katalysiert das Bettmaterial insbesondere die Umsetzung von bei der Verbrennung/Vergasung auftretenden Zwischenprodukten, wie beispielsweise Teere, zu gasförmigen Produkten.

Eine Funktion des Bettmaterials ist somit auch, Störstoffe, wie beispielsweise Teere oder andere langkettige kohlenwasserstoffhaltige Verbindungen, insbesondere bei Raumtemperatur (25°C) flüssige oder feste kohlenwasserstoffhaltige Verbindungen, im Verfahren zu niedermolekularen Verbindungen, insbesondere bei Raumtemperatur gasförmigen Kohlenwasserstoffen, umzuwandeln. Hierdurch kann ein Produkt erhalten werden, das nicht nur mit Phosphor angereichert ist, sondern gleichzeitig frei von Störstoffen, wie beispielsweise bei Raumtemperatur festen oder flüssigen Kohlenwasserstoffverbindungen, ist.

Ferner kann das Bettmaterial Schadstoffe binden, wie beispielsweise Schwefel oder Halogene wie Chlor oder Fluor, welche somit nur noch in vermindertem Umfang in der Gasphase und im Abrieb zu finden sind. Das Binden der Schadstoffe im Bettmaterial kann hierbei sowohl durch chemische Bindung (entspricht Absorption) erfolgen als auch durch Adsorption.

Bevorzugt erfolgt die thermochemische Umsetzung in einem Wirbelschichtreaktor, wie beispielsweise einem in der WO2009/115549 oder WO 2010/003968 beschrieben Wirbelschichtreaktor. Hierbei können ein oder mehrere Wirbelschichtreaktoren miteinander gekoppelt sein, wie beispielsweise ein stationärer Wirbelschichtreaktor sowie ein austragender Wirbelschichtreaktor. Die Umsetzung im Wirbelschichtreaktor kann sowohl unter autothermer Vergasung/Verbrennung erfolgen, wobei ein Teil der Biomasse im Wirbelschichtreaktor zur Abdeckung der laufenden endothermen Reaktion vergast/verbrannt wird, als auch unter allothermer Vergasung, wobei die Einkopplung der notwendigen Wärme durch Wärmeübertragung erfolgt. Bei der thermochemischen Umsetzung des phosphorhaltigen Materials wird dessen mineralischer Anteil in Asche umgewandelt, wobei der Phosphoranteil des phosphorhaltigen Materials, aufgrund der Gegenwart der Calcium enthaltenden Partikel, in Form von Calciumphosphaten umgesetzt und dadurch chemisch gebunden wird.

Ein typisches Verfahren in einem Wirbelschichtreaktor umfasst beispielsweise einen stationären, d.h. nicht Wirbelschichtmaterial austragenden Wirbelschichtprozess, einen zirkulierenden, d.h. Wirbelschichtmaterialmaterial austragenden Wirbelschichtprozess mit Wirbelschichtmaterial-Rückführung und/oder einen Mehrbettwirbelschichtprozess.

Ein typischer Mehrbettwirbelschichtprozess besteht aus mindestens zwei gekoppelten Wirbelschichten und umfasst mindestens

- eine stationäre / nicht Wirbelschichtmaterial austragende und eine zirkulierende / Wirbelschichtmaterial austragende Wirbelschicht mit Wirbelschichtmaterial-Rückführung in die stationäre Wirbelschicht,
- zwei stationäre / nicht Wirbelschichtmaterial austragende Wirbelschichten, welche beispielsweise gekoppelt sein können, wie beispielsweise über eine dritte zirkulierende / Wirbelschichtmaterial austragende Wirbelschicht mit Wirbelschichtmaterial-Rückführung in eine der beiden stationären Wirbelschichten, und
- zwei zirkulierende / Wirbelschichtmaterial austragende Wirbelschichten mit Wirbelschichtmaterial-Rückführung in die jeweils andere zirkulierende Wirbelschicht.

**Kurze Beschreibung der Zeichnungen**

**Figur 1** zeigt ein Ausführungsbeispiel einer typischen Reaktorvorrichtung für ein Vergasungsverfahren; und

**Figur 2** zeigt ein Ausführungsbeispiel einer typischen Reaktorvorrichtung für ein Verbrennungsverfahren.

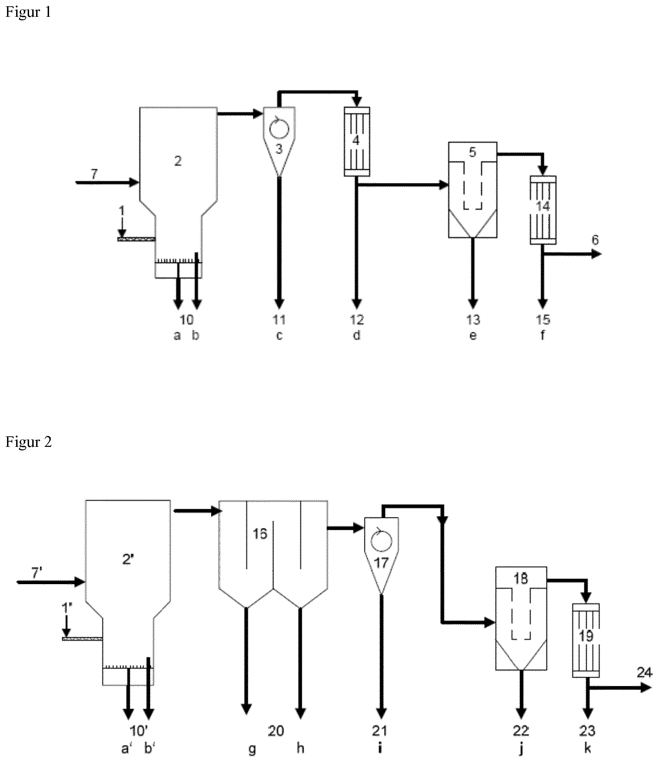

Identische Bezugsziffern in den Figuren 1 und 2 haben identische Bedeutungen.

Vergasungsprozesse (Figur 1) haben zum Ziel, den bevorzugt festen Brennstoff in einen gasförmigen Brennstoff zu überführen und dabei chemisch gespeicherte Energie in Form von Brennwert im Produktgas zu erhalten. Das Produktgas wird anschließend stofflich und/oder energetisch verwertet.

Verbrennungsprozesse (Figur 2) haben zum Ziel, die im Brennstoff gespeicherte chemische Energie möglichst vollständig in thermische Energie umzuwandeln. Am Ende des Prozesses verbleibt ein Rauchgas, welches bevorzugt keine chemische Energie mehr, sondern nur noch latente und fühlbare Wärme enthält.

Eine typische Reaktorvorrichtung für ein Vergasungsverfahren ist in **Figur 1** gezeigt, wobei die Reaktorkomponenten wie folgt dargestellt sind:

1    Edukteintrag
2    Reaktor
3    Zyklon/Abscheider
4    Wärmeübertrager
5    Filter
6    Produktgas
7    Bettmaterialeintrag

10    Austrag Feststofffraktionen a und b
11    Austrag Feststofffraktion c
12    Austrag Feststofffraktion d
13    Austrag Feststofffraktion e
14    Wärmeübertrager
15    Austrag Feststofffraktion f sowie Flüssigfraktion

Beschreibung des in Figur 1 exemplarisch dargestellten Vergasungsverfahrens:
Der zu verarbeitende Brennstoff wird mit Edukt-Eintragssystem 1, hier am Beispiel in einen Wirbelschichtvergaser als Reaktor 2 eingebracht und unter autothermen und/oder allothermen Bedingungen umgewandelt. Diese Umwandlung kann in einem oder mehreren gekoppelten Reaktoren erfolgen und läuft bei Temperaturen > 600°C ab.

Das für den Reaktor 2 benötigte Bettmaterial wird über das Bettmaterial-Eintragssystem 7 in den Reaktor 2 eingebracht.

Die sich im Reaktor 2 befindlichen festen Produkte, die hauptsächlich aus schweren inerten Bestandteilen bestehen, werden als Feststofffraktionen a (Bettmaterial/Asche mit Störstoffen angereichert) und b (Bettmaterial/Asche) über den Austrag 10 abgezogen.

Durch die intensive Durchmischung des Ca-basierten Bettmaterials findet an der Oberfläche der einzelnen Bettmaterialkörner ein durch die Härte des Bettmaterials und durch die Intensität der Durchwirbelung gesteuerter Abrieb von Calciumphosphat und von Bettmaterial statt, und der gebildete staubförmige Abrieb wird mit der Flugasche aus dem Reaktor über Kopf ausgetragen. Das erzeugte Produktgas verlässt den Reaktor 2 in Richtung des nachfolgenden Zyklons 3 zusammen mit den durch die Strömungsgeschwindigkeit mitgerissenen Flugaschen und kleineren Bettmaterialpartikeln (Abrieb).
Im Zyklon 3 wird der abscheidbare Anteil der Flugasche/Bettmaterial-Mischung abgetrennt und rieselt als Feststofffraktion c in den Feststoffaustrag 11 des Zyklons 3. Diese Asche weist einen höheren Phosphor-Gehalt als die Bettasche im Reaktor 2 auf.

Die feine Flugasche/Bettmaterial-Mischung, die im Zyklon 3 nicht abgeschieden werden kann, passiert den Zyklon 3 und gelangt zu dem nachgeschalteten Wärmeübertrager 4 wo ebenfalls sich abgelagerte Flugasche/Bettmaterial-Mischung als Feststofffraktion d am Austrag 12 abgezogen werden kann.

Anschließend gelangt das Produktgas zusammen mit der noch im Produktgas enthaltenen Flugasche/Bettmaterial-Mischung in den Filter 5. Die Flugasche/Bettmaterial-Mischung wird bis zu einer bestimmten Partikelgröße abgeschieden und für eine weitere Verwendung als Feststofffraktion e aus dem Verfahren am Austrag 13 ausgetragen.

Die Flugasche/Bettmaterial-Mischungen c, d und e weisen gegenüber den Feststofffraktionen a und b in Reaktor 2 einen höheren Phosphor-Gehalt auf.

In einem nachgeschalteten Wärmeübertrager 14 kann das Produktgas weiter abgekühlt werden und über den Austrag 15 weitere sich ablagernde Teile der Flugasche/Bettmaterial-Mischung als Feststofffraktion f abgezogen werden. Bei Unterschreitung des Taupunkts können auch kondensierbare Gaskomponenten (Dämpfe) kondensiert und flüssig abgeführt werden.

Das entstaubte Produktgas 6 verlässt den Prozess und kann nun in nachfolgenden Prozessschritten energetisch oder stofflich genutzt werden.

Eine typische Reaktorvorrichtung für ein Verbrennungsverfahren ist in **Figur 2** gezeigt, wobei die Reaktorkomponenten wie folgt dargestellt sind:

1'    Edukteintrag
2'    Reaktor
7'    Bettmaterialeintrag
10'    Austrag Feststofffraktionen a' und b'
16    Dampferzeuger (Wärmeübertrager)
17    Zyklon/Abscheider (kann auch entfallen)
18    Filter und/oder Adsorber
19    Economiser bzw. Rauchgaskondensator (Wärmeübertrager)
20    Austrag Feststofffraktionen g und h
21    Austrag Feststofffraktion i
22    Austrag Feststofffraktion j
23    Austrag Feststofffraktion k sowie Flüssigfraktion
24    Rauchgas

Beschreibung des in Figur 2 exemplarisch dargestellten Verbrennungsverfahrens:
Der zu verarbeitende Brennstoff wird mit Edukt-Eintragssystem 1', hier am Beispiel in einen Wirbelschichtvergaser als Reaktor 2' eingebracht und unter autothermen Bedingungen umgewandelt. Diese Umwandlung kann in einem oder mehreren gekoppelten Reaktoren erfolgen und läuft bei Temperaturen > 600°C ab.

Das für den Reaktor 2' benötigte Bettmaterial wird über das Bettmaterial Eintragssystem 7' in den Reaktor 2' eingebracht.

Die sich im Reaktor 2' befindlichen festen Produkte, die hauptsächlich aus schweren inerten Bestandteilen bestehen, werden als Feststofffraktionen a' (Bettmaterial/Asche mit Störstoffen angereichert) und b' (Bettmaterial/Asche) über den Austrag 10' abgezogen.

Durch die intensive Durchmischung des Ca-basierten Bettmaterials findet an der Oberfläche der einzelnen Bettmaterialkörner ein durch die Härte des Bettmaterials und durch die Intensität der Durchwirbelung gesteuerter Abrieb von Calciumphosphat und von Bettmaterial statt, und der gebildete staubförmige Abrieb wird mit der Flugasche aus dem Reaktor über Kopf ausgetragen.

Das durch die Verbrennung entstehende Rauchgas verlässt den Reaktor 2' und durchströmt den nachgeschalteten Dampferzeuger 16 zusammen mit den durch die Strömungsgeschwindigkeit mitgerissenen Flugaschen, die ggf. noch erweicht sein können, und Bettmaterialpartikeln (Abrieb). Durch Wärmeabgabe des Rauchgases kühlt sich dieses ab, ggf. erweichte Aschen erstarren zu festen Partikeln. In den Umlenkungen des Rauchgases, in denen die Strömung von vertikal fallend auf vertikal steigend umgelenkt wird, werden die Flugaschen und Bettmaterialpartikel gravimetrisch abgeschieden und über mehrere Austragsstellen 20 als Feststofffraktionen g und h ausgetragen.

Das Rauchgas verlässt den Dampferzeuger 16 in Richtung des ggf. nachfolgenden Zyklons/Abscheiders 17. Im Zyklon 17 wird der abscheidbare Anteil der Flugasche/Bettmaterial-Mischung abgetrennt und rieselt als Feststofffraktion i in den Feststoffaustrag 21 des Zyklons 17.

Die feine Flugasche/Bettmaterial-Mischung, die im Zyklon 17 nicht abgeschieden werden kann gelangt anschließend mit dem Rauchgas in den Filter 18. Die Flugasche/Bettmaterial-Mischung wird bis zu einer bestimmten Partikelgröße im Filter 18 abgeschieden und für eine weitere Verwendung als Feststofffraktion j aus dem Verfahren am Austrag 22 ausgetragen.

Die Flugasche/Bettmaterial-Mischungen g, h, i und j weisen gegenüber den Feststofffraktionen a' und b' aus Reaktor 2' einen höheren Phosphor-Gehalt auf.

In einem nachgeschalteten Economiser bzw. Rauchgaskondensator 19 (Wärmeübertrager) kann das Rauchgas weiter abgekühlt werden und über den Austrag 23 weitere sich ablagernde Teile der Flugasche/Bettmaterial-Mischung als Feststofffraktion k abgezogen werden. Bei Unterschreitung des jeweiligen Taupunkts können auch kondensierbare Gaskomponenten (Dämpfe) kondensiert und flüssig abgeführt werden.

Das entstaubte Rauchgas 24 verlässt den Prozess und kann nun durch weitere Abkühlung z.B. durch einen ORC-Prozess energetisch genutzt werden.

Die Einbindung von Phosphor erfolgt

- im Wirbelschichtverfahren in das Calcium enthaltende Wirbelschichtmaterial und/oder in den Calcium enthaltenden Wirbelschichtmaterialabrieb,
- und/oder im Wirbelschichtaustrag,
  bevorzugt im Wirbelschichtaustrag.

Die thermochemische Umsetzung erfolgt üblicherweise bei einer Temperatur unterhalb der Ascheerweichungstemperatur, um die Verglasung der Aschen sowie die Bildung von Agglomeraten und/oder Ablagerungen zu verhindern. Der bevorzugte Temperaturbereich liegt zwischen 400°C und 1100°C, besonders bevorzugt zwischen 600°C und 1100°C. Der Begriff "thermochemische Umsetzung", wie hierin verwendet, umfasst insbesondere die Pyrolyse und/oder Vergasung und/oder Verbrennung des phosphorhaltigen Materials.

Die in dem Bettmaterial enthaltenen Calcium enthaltenden Partikel umfassen insbesondere Calciumoxid-(CaO) und/oder Calciumcarbonatpartikel ($CaCO_3$). Üblicherweise umfassen die als Ausgangsmaterial vor der thermochemischen Umsetzung in dem Bettmaterial enthaltenen Calcium enthaltenden Partikel im Wesentlichen Calciumcarbonat ($CaCO_3$), bevorzugt in einem Anteil von >90 Gew.% bezogen auf das Gesamtgewicht der Calcium enthaltenden Partikel. Zusätzlich können auch weitere mineralische Bestandteile vorhanden sein, insbesondere Carbonate anderer Metalle, wie beispielsweise Magnesiumcarbonat. Insbesondere bei Verwendung von Dolomit, beziehungsweise Anteilen dolomitischer Materialien, wie dolomitischer Kalkstein, als Bettmaterial, kann der Anteil von Magnesiumcarbonat auch > 10 Gew.%, bezogen auf das Gesamtgewicht des Bettmaterials, betragen. Dolomit bzw. dolomitische Anteile im Bettmaterial weisen eine katalytische Eigenschaft dahingehend auf, dass bei der Pyrolyse bzw. Vergasung erzeugte Teere in kurzkettige Kohlenwasserstoffverbindungen umgewandelt (gecrackt) werden können. Ergänzend können auch Quarzsand und/oder Kiessand als Bettmaterialien eingesetzt werden.

Während der thermochemischen Umsetzung werden aus den Carbonaten im Ausgangsmaterial des Reaktorbetts die entsprechenden Oxide gebildet, d.h. es wird aus Calciumcarbonat vermehrt Calciumoxid gebildet, so dass der Anteil an Oxiden, wie bsp. Calciumoxid, während der thermochemischen Umsetzung zunächst zunimmt, im weiteren Verlauf der thermochemischen Umsetzung die Oxide insbesondere an der Oberfläche der Partikel jedoch vermehrt in die entsprechenden Phosphate überführt werden.

In einer bevorzugten Ausführungsform bestehen die Calcium enthaltenden, sich in dem Reaktor vor der thermochemischen Umsetzung als Ausgangsmaterial befindlichen Partikel somit im Wesentlichen aus Calciumoxid- (CaO)/Magnesiumoxid- (MgO) und/oder Calciumcarbonat-($CaCO_3$)/Magnesiumcarbonat- ($MgCO_3$) -Partikeln, wobei der Gehalt an CaO/MgO und/oder $CaCO_3$/$MgCO_3$ bevorzugt >90 Gew.%, beträgt.

Die calciumhaltigen Partikel liegen vorzugsweise als Schüttgut vor, bevorzugt im Bettmaterial des Reaktors, insbesondere als reaktives Bettmaterial. Ein bevorzugtes Bettmaterial ist das in der WO2009/100937 beschriebene Material, welches bevorzugt aus mikritischem Kalk besteht. Der Anteil an calcium- und/oder magnesium-haltigen Partikeln im Schüttgut liegt bevorzugt bei 90 Gew.%, bezogen auf das Gesamtgewicht des Schüttguts. Insbesondere ist der Gehalt an calcium- und/oder magnesium-haltigen Partikeln im Schüttgut so zu wählen, dass die Phosphor-einbindenden Partikel im stöchiometrischen Überschuss bezogen auf den Phosphorgehalt des phosphorhaltigen Materials vorliegen, um hierdurch eine möglichst vollständige Umsetzung des Phosphors zu Phosphaten (im Wesentlichen Calciumphosphate und/oder Magnesiumphosphate) zu ermöglichen. Es konnte in der vorliegenden Erfindung überraschend gefunden werden, dass die Verwendung von insbesondere CaO/$CaCO_3$-basierten Wirbelschichtmaterialien nicht nur positive Wirbelschichtbettmaterialeigenschaften wie beispielsweise hohe katalytische Aktivität und mechanische Stabilität, aufweist, sondern auch eine signifikante Erhöhung der Verglasungstemperatur bewirkt.

Zusätzlich zu den Calcium enthaltenden Partikeln kann das Reaktormaterial, wie zuvor erwähnt, auch Oxide und Carbonate weiterer Metalle umfassen. Bevorzugte Metalloxide sind vom Typ $M_xO_y$, wobei M ein Metall bezeichnet, z.B. Sr, Ba, La, Mn oder Y und x und y in üblicher Weise geeignete ganze Zahlen bezeichnen.

In weiteren Ausführungsformen kann das Metalloxid einen Anteil Eisenoxid und/oder Siliziumdioxid umfassen. Gegebenenfalls kann auch es auch Aluminiumoxid enthalten.

Bevorzugte Carbonate sind vom Typ $M_x(CO_3)_y$, wobei M ein Metall wie z.B. Sr, Ba, La, Mn oder Y bezeichnet und x und y in üblicher Weise geeignete ganze Zahlen bezeichnen.

Die insbesondere bei thermochemischer Umsetzung in einem Wirbelschichtreaktor eingesetzten calciumhaltigen Partikel weisen üblicherweise eine durchschnittliche Partikelgröße im Bereich zwischen 0,1 mm und 3 mm, besonders bevorzugt zwischen 0,5 mm und 1,5 mm, auf. Die Partikel sind bevorzugt im Wesentlichen frei von Partikeln mit einer Partikelgröße < 100 $\mu$m, insbesondere < 50 $\mu$m, die in der Regel einen Großteil des Abriebs ausmachen, der bei üblichen Gasgeschwindigkeiten ausgetragen wird.

In einer bevorzugten Ausführungsform bestehen die calciumhaltigen Partikel im Wesentlichen aus Partikeln, die einen Kern aus mindestens einem Carbonat und eine den Kern umgebende Hülle (oder auch Schale) aus mindestens einem Metalloxid aufweisen. In einer weiteren, besonders bevorzugten Ausführungsform weisen die Partikeln einen Kern aus mindestens einem Metalloxid und eine den Kern umgebende Hülle (oder auch Schale) aus mindestens einem Carbonat auf. Es ist bevorzugt, dass die Hülle (oder auch Schale) den Kern im Wesentlichen vollständig umschließt.

Durch die thermochemische Umsetzung der Calcium enthaltenden Partikel in Gegenwart von phosphorhaltigem Material unterhalb der Ascheerweichungstemperatur wird im phosphorhaltigem Material enthaltendes Phosphor in Form von Phosphat chemisch gebunden und so nutzbar gemacht, beispielsweise in Form von Calciummetaphosphat ($Ca_2P_2O_7$) oder Tricalciumphosphat ($Ca_3(PO_4)_2$).

Da die Einbindung des im Brennstoff enthaltenen Phosphors vor allem auf der Oberfläche der Calcium enthaltenden Partikel erfolgt, erfolgt eine Phosphoranreicherung, bedingt durch den Materialabrieb während der thermochemischen Umsetzung, im Austrag des Reaktors, wie beispielsweise im Wirbelschichtaustrag oder durch den mit dem Produktgas mitgerissenen Materialabrieb in den produktgasseitig nachgelagerten Austragsstellen. Durch Verwendung der zuvor beschrieben mechanisch stabilen Partikel kann somit der Phosphoranteil im Abrieb erhöht werden, und somit die Verfahrenseffizienz weiter gesteigert werden. Ferner können mit dem Abrieb weitere düngemittelrelevante Substanzen, wie beispielsweise Kaliumcarbonat, Kaliumphosphat, Magnesiumcarbonat und Magnesiumphosphat, ausgetragen werden. Der Anteil dieser weiteren düngemittelrelevanten Substanzen kann durch den Anteil an entsprechenden Metalloxiden bzw. Metallcarbonaten im Schüttgut in vorteilhafter Weise gesteuert werden.

Da, wie zuvor beschrieben, die Phosphoranreicherung vor allem im Abrieb der Calcium enthaltenden Partikel erfolgt, erfolgt die Abtrennung der mit Phosphor angereicherten Partikel aus dem Reaktoraustrag, in einer oder mehreren Abtrennvorrichtungen, wie beispielsweise in einer oder mehreren Abtrennvorrichtungen eines Wirbelschichtreaktors oder in den produktgasseitig nachgelagerten Austragsstellen. Die Abtrennung des Abriebs erfolgt somit in mindestens einer Abtrennvorrichtung oder mehreren seriell geschalteten Abtrennvorrichtungen. Durch Bindung von Schadstoffen, wie beispielsweise den zuvor beschriebenen langkettigen Kohlenwasserstoffen, Schwefel, Chlor, Fluor oder Schwermetallen, im Bettmaterial des Reaktors kann durch Abtrennung der mit Phosphor angereicherten Partikel aus dem Reaktoraustrag ein mit Phosphor angereichertes

Produkt erhalten werden, welches frei von störenden Nebenprodukten ist bzw. diese nur noch in geringer Menge enthält.

In einer alternativen Ausführungsform kann die Phosphoranreicherung auch im Bettmaterial des Reaktors erfolgen. Hierbei bindet das Bettmaterial den Phosphor durch Bildung der zuvor beschriebenen Phosphatverbindungen im Bettmaterial des Reaktors. In der Figur 1 erfolgt der Austrag des so angereicherten Bettmaterials als Stoffstrom b über den Austrag 10, der direkt aus dem Reaktor 2 abgezogen wird.

In einer bevorzugten Ausführungsform verfügt der Reaktor über eine oder mehrere Trennvorrichtungen, welche üblicherweise bei unterschiedlichen Betriebstemperaturen arbeiten und welche innerhalb oder außerhalb des Bewegtbettreaktors angeordnet sein können. Beispielsweise kann die Temperatur einer ersten Abtrennvorrichtung in einem Bereich von 500-750°C liegen, bevorzugt in einem Bereich von 600-700°C, und die Temperatur einer zweiten Abtrennvorrichtung in einem Bereich von 100-400°C, bevorzugt in einem Bereich von 150-250°C liegen.

In einer ersten oder mehreren stromabwärts angeordneten Abtrennvorrichtungen erfolgt vor allem die Abtrennung des mit Phosphor angereicherten, typischerweise partikulären Abriebs aus dem Austrag der Rauch- und/oder Vergasungsgase, beispielsweise des Wirbelschichtaustrags. Die Betriebstemperatur der ersten Abtrennungvorrichtung bzw. mehrerer Abtrennungvorrichtungen liegt oberhalb 400 °C, bevorzugt zwischen 600 und 1100°C, bezogen auf ein bei atmosphärischem Druck betriebenes Wirbelschichtverfahren, um den Gehalt an Schwermetallen, also Metalle mit einer Dichte > 5 g/cm$^3$, wie beispielsweise Cadmium, Blei, Chrom, Quecksilber, Arsen, Cobalt und Thallium, und/oder weiteren Schadstoffen, wie beispielsweise polyaromatische Kohlenwasserstoffe aus der Pyrolyse und/oder Vergasung und/oder Verbrennung, zu reduzieren.

Die Abtrennung von Reststoffen, wie beispielsweise Restgehalte von nicht mit Phosphor umgesetzten Calcium enthaltenden Partikeln und/oder Schwermetallen mit einer Dichte > 5 g/cm$^3$ wie beispielsweise Cadmium, Blei, Chrom, Quecksilber, Arsen, Cobalt, Thallium und/oder weiteren Schadstoffen wie beispielsweise polyaromatischen Kohlenwasserstoffen aus Pyrolyse und/oder Vergasung, erfolgt üblicherweise in einer zweiten oder mehreren nachgeschalteten Abtrennvorrichtungen. Die Betriebstemperatur dieser Abtrennungvorrichtung(en) sollte vorzugsweise unterhalb 400 °C, bevorzugt unterhalb 200 °C liegen.

Der nach der Abtrennung erhaltene mit Phosphor angereicherte Abrieb weist in Abhängigkeit vom Phosphorgehalt des bei der thermochemischen Umsetzung eingesetzten Materials, üblicherweise einen Phosphorgehalt von 1 bis 5-Gew.%, bevorzugt von bis zu 10-Gew.% auf, bezogen auf das Gesamtgewicht des Abriebs. Insbesondere bei Einsatz eines phosphorreichen Ausgangsmaterials, wie beispielsweise Klärschlamm, können durch das erfindungsgemäße Verfahren Phosphorgehalte im Abrieb von 5-10 Gew.% erhalten werden.

Um die Pflanzenverfügbarkeit des Phosphors in dem mit Phosphor angereichertem Abrieb zu verbessern, erfolgt eine Ansäuerung der Partikel. Insbesondere Calciummetaphosphat ($Ca_2P_2O_7$) und Tricalciumphosphat ($Ca_3(PO_4)_2$) sind beide nicht ausreichend in Wasser löslich, weshalb diese Substanzen keine direkte Pflanzenverfügbarkeit aufweisen. Wichtig für eine hohe Pflanzenverfügbarkeit ist die Bildung von wasserlöslichen $HPO_4^{2-}$- und $H_2PO_4^-$ -Ionen. Die Bildung dieser Ionen wird in der vorliegenden Erfindung durch Zugabe einer Säure zum Abrieb erzielt. Die Säure ist vorzugsweise ausgewählt aus $CO_2$ bzw. Kohlensäure, Phosphorsäure, Schwefelsäure, Salpetersäure, oder Kombinationen davon.

Durch die Verwendung einer Säure können wasserlösliche Phosphate wie beispielsweise Calciumdihydrogen-phosphat ($Ca(H_2PO_4)_2$)*$H_2O$ und Calciumhydrogenphosphat ($Ca(HPO_4)$*$2H_2O$) gebildet werden. Insbesondere Calci-umdihydrogenphosphat besitzt eine hohe Wasserlöslichkeit von 18 g/l bei Standardbedingungen von 25°C und 1 bar und ist damit gut pflanzenverfügbar. Bei der Reaktion mit einer Säure kann beispielsweise Tricalciumphosphat in einem ersten Schritt in Calciumhydrogenphosphat umgewandelt werden, wie durch die folgende Formel (1) dargestellt:

$$(1) \qquad Ca_3(PO_4)_2 + 2H^+ \rightleftharpoons 2Ca(HPO_4) + Ca^{2+}$$

In einem zweiten Schritt kann die Umwandlung in Phosphorsäure, welche eine wichtige Ausgangskomponente bei der Düngemittelherstellung ist, erfolgen, wie durch die folgende Formel (2) dargestellt.

$$(2) \qquad Ca(HPO_4) + 2H^+ \rightleftharpoons H_3PO_4 + Ca^{2+}$$

In einer bevorzugten Ausführungsform wird die Ansäuerung durch $CO_2$ bzw. Kohlensäure, beispielsweise durch Zugabe von Wasser und $CO_2$, erzielt. Hierbei kann das $CO_2$ beispielsweise aus Biogas, Klärgas, Rauchgas oder Produktgas erhalten werden, insbesondere aus der Verbrennung des phosphorhaltigen Materials im erfindungsgemäßen Verfahren. Hierbei ist es im allgemeinen ausreichend, wenn das durch die thermochemische Umsetzung gebildete $CO_2$ mit ebenfalls bei der Verbrennung gebildetem Wasserdampf oder mit Luftfeuchtigkeit vor der Ansäuerung in Kontakt kommt, so dass eine externe Zugabe von Wasser nicht notwendig ist. Durch die Nutzung des bei der thermochemischen Umsetzung gebildeten $CO_2$ kann die Effizienz des Verfahrens weiter gesteigert und der $CO_2$-Ausstoß verringert werden. Insbesondere bei Einsatz von Biogasen kann dessen $CO_2$-Gehalt in vorteilhafter Weise verringert werden.

Die Bildung von Calciumhydrogenphosphat und Calciumdihydrogenphosphat erfolgt hierbei nach folgenden Formeln (3) und (4):

$$(3) \quad Ca_3(PO_4)_2 + 3H_2O + CO_2 \rightleftharpoons 2Ca(HPO_4) \cdot 2H_2O + CaCO_3$$

$$(4) \quad Ca_3(PO_4)_2 + 3H_2O + 2CO_2 \rightleftharpoons Ca(H_2PO_4)_2 \cdot H_2O + 2CaCO_3$$

Bei der in Formel (3) dargestellten Reaktion liegt das thermodynamische Gleichgewicht bei 25°C bereits bei einem Systemdruck von 1 bar vollständig auf der Seite der Produkte. Der Verlauf des thermodynamischen Gleichgewichts der Reaktion der Formel (4) bei 25°C mit zunehmendem Druck zeigt, dass bereits bei einem Systemdruck von 1 bar verstärkt Calciumdihydrogenphosphat gebildet wird. Nach dieser bevorzugten Ausführungsform kann somit durch die praktisch frei verfügbaren und bereits durch die thermodynamische Umsetzung im erfindungsgemäßen Verfahren gebildeten Substanzen $H_2O$ und $CO_2$ Calciumhydrogenphosphat und Calciumdihydrogenphosphat, d.h. Phosphor in pflanzenverfügbarer Form, gebildet werden.

In einer weiteren bevorzugten Ausführungsform erfolgt die Ansäuerung in zwei Stufen. Hierbei wird in einer ersten Stufe mit $CO_2$/Kohlensäure angesäuert und in einem zweiten Schritt mit einer weiteren Säure, beispielsweise ausgewählt aus Phosphorsäure, Schwefelsäure und/oder Salpetersäure.

Der durch das erfindungsgemäße Verfahren erhaltene, mit Phosphor angereicherte Wertstoff eignet sich insbesondere zur Verwendung als Düngemittel oder Düngemittelzusatz, wie beispielsweise als Zusatz zu einem Mehrnährstoffdünger bzw. dessen Herstellung durch Aufarbeitung des erhaltenen mit Phosphor angereicherten Wertstoffs. In einer bevorzugten Ausführungsform kann der erhaltene mit Phosphor angereicherte Wertstoff ohne weitere Aufarbeitung als Düngemittel oder Düngemittelzusatz verwendet werden. Durch Addition eines Stickstoff (N)- und Kalium (K)-Trägers, sowie optional einem Schwefel (S)-träger kann insbesondere ein NPK(S)-Mehrnährstoffdünger erhalten werden, welcher in beliebigen landwirtschaftlichen Bereichen sowie im Garten- und Zierpflanzenbereich einsetzbar ist.

## Patentansprüche

1. Verfahren zur Phosphorrückgewinnung, umfassend die Schritte:

   i) thermochemische Umsetzung eines phosphorhaltigen Materials in Gegenwart von calciumhaltigen Partikeln in einem Bewegtbettreaktor,

   ii) Abtrennung von mit Phosphor angereichertem Abrieb aus dem Bewegtbettreaktor, wobei die Abtrennung des mit Phosphor angereicherten Abriebs aus dem Reaktoraustrag in einer oder mehreren Abtrennvorrichtungen erfolgt, welche innerhalb oder außerhalb des Bewegtbettreaktors angeordnet sein können, wobei die Betriebstemperatur der ersten Abtrennvorrichtung oberhalb 400 °C liegt, um den Gehalt an Schwermetallen und polyaromatischen Kohlenwasserstoffen zu reduzieren, und

   iii) Umsetzung des in Schritt ii) erhaltenen, mit Phosphor angereicherten Abriebs mit einer Säure, zum Erhalt eines mit Phosphor angereicherten, pflanzenverfügbaren Wertstoffs.

2. Verfahren nach Anspruch 1, wobei die thermochemische Umsetzung bei einer Temperatur von 400 °C bis zu 1100°C, vorzugsweise von 600°C-1100°C, erfolgt.

3. Verfahren nach einem der vorhergehenden Ansprüche, wobei die thermochemische Umsetzung in einem Wirbelschichtreaktor erfolgt.

4. Verfahren nach Anspruch 3, wobei die calciumhaltigen Partikel eine durchschnittliche Partikelgröße im Bereich von 0,3-3 mm aufweisen.

5. Verfahren nach einem der vorhergehenden Ansprüche, wobei das phosphorhaltige Material ein Brennstoff ist.

6. Verfahren nach Anspruch 5, wobei der Brennstoff ausgewählt ist aus Ersatzbrennstoff, Biomasse, Klärschlamm, Haushaltsabfall, Industrieabfall, Gärrest, Schlachthofabfall, oder Kombinationen davon.

7. Verfahren nach einem der vorhergehenden Ansprüche, wobei die calciumhaltigen Partikel im Wesentlichen CaO

und/oder CaCO$_3$ umfassen.

8. Verfahren nach einem der Ansprüche 1 - 7, wobei die Säure ausgewählt ist aus Kohlendioxid, Phosphorsäure, Schwefelsäure, Salpetersäure, oder Kombinationen davon.

9. Verfahren nach einem der vorhergehenden Ansprüche, wobei der Abrieb einen Phosphorgehalt von 1 bis 10 Gew.% aufweist.

10. Verwendung des gemäß dem Verfahren nach mindestens einem der Ansprüche 1 - 9 erhaltenen Wertstoffs als Düngemittel oder Düngemittelzusatz.

**Claims**

1. A method for recovering phosphorus, comprising the following steps:

   i) thermochemical reaction of a phosphorus-containing material in the presence of calcium-containing particles in a moving bed reactor,
   ii) separation of fines enriched with phosphorus from the moving bed reactor, wherein the seperation of the fines enriched with phosphorus is carried out from the reactor discharge in one or more separation devices which may be disposed inside or outside the moving bed reactor, wherein the operating temperature of the first separation device is over 400 °C, in order to reduce the quantity of heavy metals and polyaromatic hydrocarbons, and
   iii) reaction of the fines enriched with phosphorus obtained from step ii) with an acid in order to obtain a phytoavailable phosphorus-enriched useful material.

2. The method as claimed in claim 1, wherein the thermochemical reaction is carried out at a temperature of from 400 °C to 1100 °C, preferably from 600 °C - 1100 °C.

3. The method as claimed in one of the preceding claims, wherein the thermochemical reaction is carried out in a fluidized bed reactor.

4. The method as claimed in claim 3, wherein the calcium-containing particles have a mean particle size in the range 0.3 - 3 mm.

5. The method as claimed in one of the preceding claims, wherein the phosphorus-containing material is a fuel.

6. The method as claimed in claim 5, wherein the fuel is selected from alternative fuel, biomass, sewage sludge, household waste, industrial waste, fermentation residue, slaughterhouse waste or combinations thereof.

7. The method as claimed in one of the preceding claims, wherein the calcium-containing particles essentially comprise CaO and/or CaCO$_3$.

8. The method as claimed in one of claims 1 - 7, wherein the acid is selected from carbon dioxide, phosphoric acid, sulphuric acid, nitric acid or combinations thereof.

9. The method as claimed in one of the preceding claims, wherein the phosphorus content of the fines is from 1 % to 10 % by weight.

10. Use of the useful material obtained by the method as claimed in at least one of claims 1 - 9, as a fertilizer or fertilizer additive.

**Revendications**

1. Procédé de récupération de phosphore, comportant les étapes consistant à :

   i) effectuer une conversion thermochimique d'un matériau contenant du phosphore en présence de particules

10

contenant du calcium dans un réacteur à lit mobile,

ii) séparer des fines enrichies en phosphore du réacteur à lit mobile, la séparation des fines enrichies en phosphore provenant de l'effluent du réacteur étant effectuée dans un ou plusieurs dispositifs de séparation qui peuvent être agencés à l'intérieur ou à l'extérieur du réacteur à lit mobile, dans lequel la température de fonctionnement du premier dispositif de séparation est supérieure à 400 °C afin de réduire la teneur en métaux lourds et en hydrocarbures polyaromatiques, et

iii) convertir les fines enrichies en phosphore, obtenues à l'étape ii), avec un acide pour obtenir un matériau enrichi en phosphore, assimilable par les plantes.

2.  Procédé selon la revendication 1, dans lequel la conversion thermochimique s'effectue à une température de 400 °C à 1 100 °C, de préférence de 600 °C à 1 100 °C.

3.  Procédé selon l'une des revendications précédentes, dans lequel la conversion thermochimique s'effectue dans un réacteur à lit fluidisé.

4.  Procédé selon la revendication 3, dans lequel les particules contenant du calcium ont une taille de particule moyenne dans la plage de 0,3 à 3 mm.

5.  Procédé selon l'une des revendications précédentes, dans lequel le matériau contenant du phosphore est un combustible.

6.  Procédé selon la revendication 5, dans lequel le combustible est choisi parmi un combustible de substitution, une biomasse, des boues résiduaires, des déchets ménagers, des déchets industriels, des résidus de fermentation, des déchets d'abattoirs ou des combinaisons de ceux-ci.

7.  Procédé selon l'une des revendications précédentes, dans lequel les particules contenant du calcium comportent essentiellement du CaO et/ou du $CaCO_3$.

8.  Procédé selon l'une des revendications 1 à 7, dans lequel l'acide est choisi parmi du dioxyde de carbone, de l'acide phosphorique, de l'acide sulfurique, de l'acide nitrique ou des combinaisons de ceux-ci.

9.  Procédé selon l'une des revendications précédentes, dans lequel les fines ont une teneur en phosphore de 1 à 10 % en poids.

10. Utilisation du matériau obtenu selon le procédé d'au moins une des revendications 1 à 9 comme engrais ou additif d'engrais.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011137880 A
- WO 2009100937 A
- US 4352332 A
- WO 2009115549 A
- WO 2010003968 A